# EUROPÄISCHE PATENTSCHRIFT

(11) **EP 0 373 514 B1**
(45) Veröffentlichungstag und Bekanntmachung des Hinweises auf die Patenterteilung: **17.03.1993**
(21) Anmeldenummer: 89122604.5
(22) Anmeldetag: 07.12.1989
(51) Int. Cl.: G01B 5/00, G01B 7/28

(54) **Vorrichtung zum gleichzeitigen Vermessen hintereinanderliegender Zylinderbohrungen**
Device for the simultaneous measurement of consecutive cylinder bores
Dispositif pour mesurer simultanément les diamètres intérieurs d'alésages consécutifs

(30) Priorität: 09.12.1988 DE 3841439
(43) Veröffentlichungstag der Anmeldung: 20.06.1990
(73) Patentinhaber: PIETZSCH Automatisierungstechnik GmbH, 76275 Ettlingen (DE)
(72) Erfinder: Overlach, Knud, Dr., D-7505 Ettlingen 6 (DE); Wamser, Manfred, D-7500 Karlsruhe (DE)
(74) Vertreter: Geitz, Heinrich, Dr.-Ing.

(56) Entgegenhaltungen:
- EP-A- 0 077 730
- EP-A- 0 292 767
- US-A- 4 338 726
- Firmendruckschrift PAT Multi-Incometer der Firma PAT-Messdata GmbH in W-7505 Ettlingen

## Beschreibung

Die Erfindung bezieht sich auf eine Vorrichtung zum gleichzeitigen Vermessen hintereinanderliegender Zylinderbohrungen, insbesondere der Lagerbohrungen von Lagergassen bei Motorblöcken, Zylinderköpfen oder dergleichen, auf Form und Fluchtung, mit einer als langgestrecktes Rohr ausgebildeten Meßsonde, die mit nach Anzahl und axialem Abstand voneinander entsprechend den zu vermessenden Zylinderbohrungen angeordneten, radial vorstehende Taststifte aufweisenden Meßfühlern ausgerüstet ist, und mit einer Antriebseinheit, die eine mit der Meßsonde fluchtende Antriebswelle und je einen mit der Antriebswelle wirkverbundenen Antriebsmotor zum Erzeugen einer translatorischen und einer rotatorischen Bewegung besitzt.

Eine Meßvorrichtung dieser Art und Zweckbestimmung ist bereits aus der Firmendruckschrift "PAT MULTI-INCOMETER" bekannt. Diese Vorrichtung, bei der es sich um ein mobiles Gerät zum Vermessen hintereinanderliegender Bohrungen, wie der Lagerbohrungen einer Kurbelwellen-Lagergasse, auf Rundheit, Formfehler und Fluchtung handelt, besitzt eine mit zwei Antriebsmotoren einer Antriebseinheit zum Erzeugen einer Drehbewegung und einer Axialbewegung in Wirkverbindung stehende Meßsonde, die mit nach Anzahl und Lage entsprechend den zu vermessenden Zylinderbohrungen des Werkstücks angeordneten Meßköpfen ausgerüstet ist und sich bei bestimmungsgemäßer Verwendung durch die Zylinderbohrungen des Werkstücks hindurcherstreckt. Die Meßsonde ist in beidendigen Lagern drehbar und axialbeweglich aufgenommen. Diese Lager sind mit den jeweiligen Stirnseiten der Werkstücke verbindbar und kardanisch aufgehängt, um etwaige Winkelfehler der Werkstückstirnseiten innerhalb konstruktiv vorgegebener Grenzen ausgleichen zu können. Die Antriebseinheit, durch die sich das eine Ende der Meßsonde hindurcherstreckt, ist an eines dieser Lager angeflanscht.

Die vorbekannte Meßvorrichtung hat sich hervorragend bewährt, soweit es sich um das Vermessen von Lagergassen großer Bohrungsdurchmesser und/oder begrenzter Längenerstreckung handelt'. Hingegen besteht bei kleinen Bohrungsdurchmessern und/oder sehr langen Bohrungsgassen die Gefahr unakzeptabler Verfälschungen der Meßergebnisse, weil von der an eines der Lager der Meßsonde auskragend angeflanschten Antriebseinheit Biegemomente auf die Meßsonde aufgebracht werden, die zu nur schwer korrigierbaren Durchbiegungen der Meßsonde führen können.

Aufgabe der vorliegenden Erfindung ist daher die Schaffung einer verbesserten Vorrichtung der obengenannten Art und Zweckbestimmung, mittels der etwaige Meßfehler infolge Durchbiegungen der Meßsonde jedenfalls stark reduziert sind und auch Bohrungsgassen großer Länge und/oder mit kleine Durchmesser aufweisenden Bohrungen präzise vermessen werden können.

Gelöst ist diese Aufgabe dadurch, daß bei der Vorrichtung nach dem Oberbegriff des Patentanspruchs 1 die Meßsonde bei bestimmungsgemäßer Verwendung beidendig in festen Lagern, die ihrerseits in Ständern eines Vorrichtungsgestells aufgenommen sind, drehbar und axialbeweglich gelagert ist und sich durch die Zylinderbohrungen des zwischen den Ständern mit den Meßsonden-Lagern positionsgenau aufgenommenen Werkstücks hindurcherstreckt, daß die Antriebseinheit unabhängig von den Lagern der Meßsonde ebenfalls gestellfest angeordnet ist und daß ein Ende der Meßsonde mittels eines in begrenztem Maße Winkelfehler und radialen Achsversatz ausgleichenden Kardangelenks mit der Antriebswelle dreh- und axialfest gekuppelt ist.

Angesichts der Wirkverbindung der Meßsonde mit der Antriebswelle der Antriebseinheit über ein innerhalb konstruktiv vorgegebener Grenzen sowohl Winkelfehler als auch radialen Achsversatz zwischen der Antriebswelle und der Meßsonde ausgleichenden kardanischen Gelenks ist bei der erfindungsgemäßen Vorrichtung ein praktisch querkraftfreier Antrieb der im übrigen völlig unabhängig von der Antriebseinheit gelagerten Meßsonde verwirklicht.

Im Interesse einer wünschenswerten Anpaßbarkeit der Meßvorrichtung an veränderte Einsatzbedingungen sieht eine Weiterbildung der Erfindung vor, daß mit dem abtriebsseitigen Ende der Antriebswelle der Antriebseinheit das Kardangelenk fest verbunden und an letzteres die Meßsonde mittels einer Kupplung axial- und drehfest, aber lösbar, angekuppelt ist. Bei der Kupplung kann es sich zweckmäßigerweise um eine Klemmkupplung mit einem geschlitzten Klemmring handeln, der mit der Abtriebsseite des Kardangelenks verbunden ist und eine zylindrische Aufnahme für einen Steckzapfen der Meßsonde besitzt sowie mittels einer Spannschraube radial verspannbar ist.

Unbeschadet des praktisch querkraftfreien Antriebs der Meßsonde kann es bei letzterer unter dem Einfluß ihres Eigengewichtes zu Durchbiegungen kommen, wenn die Meßsonde große Länge aufweist oder für das Ausmessen von Zylinderbohrungen mit kleinen Durchmessern ausgelegt ist. Hier schafft eine Weiterbildung der Erfindung dergestalt Abhilfe, daß mit dem von der Antriebseinheit entfernten Ende der Meßsonde ein sich von dieser forterstreckender Adapter mit einem definierten und einstellbaren Gegengewicht zum Aufbringen eines Durchbiegungen der Meßsonde infolge Eigengewicht ausgleichenden Biegemoments dreh- und axialfest verbindbar ist. Bei dieser Weiterbildung wird mithin eine unter dem Einfluß ihres Eigengewichtes auftretende Durchbiegung der Meßsonde weitgehend kompensiert.

Gemäß einer anderen Weiterbildung der Erfindung sind die beidendigen Lager der Meßsonde dem jeweiligen Ständer des Gestells austauschbar zugeordnet. Dabei hat sich als zweckmäßig erwiesen, wenn die Lager der Meßsonde jeweils einer ihrerseits in einer Durchgangsbohrung in dem jeweiligen Ständer des Gestells austauschbar aufgenommenen Trägerscheibe zugeordnet sind, so daß ein einfacher Lageraustausch durch Auswechseln der jeweils mit einem Lager bestückten Trägerscheiben gelingt.

Die beidendigen Lager der Meßsonde können als Gleitlager mit im Verhältnis zum Durchmesser kleiner Breite und sich jeweils zu den Lagerstirnseiten hin erweiternden Lagerbohrungen oder auch alternativ dazu als Pendellager ausgebildet sein.

Im Hinblick auf die Zweckbestimmung der erfindungsgemäßen Meßvorrichtung zum Vermessen von Zylinderbohrungen mit kleinen Bohrungsdurchmessern ist es von Vorteil, wenn die Meßfühler in die Meßsonde integriert sind und lediglich die Spitzen der Taststifte radial über den Mantel der Meßsonde vorstehen.

Anhand der beigefügten Zeichnung soll nachstehend eine Ausführungsform der erfindungsgemäßen Meßvorrichtung erläutert werden. In schematischen Ansichten zeigen:
Fig. 1 eine perspektivische Gesamtansicht einer Vorrichtung zum Vermessen der Lagerbohrungen einer Lagergasse in einem - in strichpunktierten Linien nur angedeuteten - Zylinderkopf einer Brennkraftmaschine,
Fig. 2 eine Vorderansicht der Meßvorrichtung, ebenfalls mit in strichpunktierten Linien angedeutetem Werkstück,
Fig. 3 die Meßvorrichtung in einer Draufsicht zu Fig. 2,

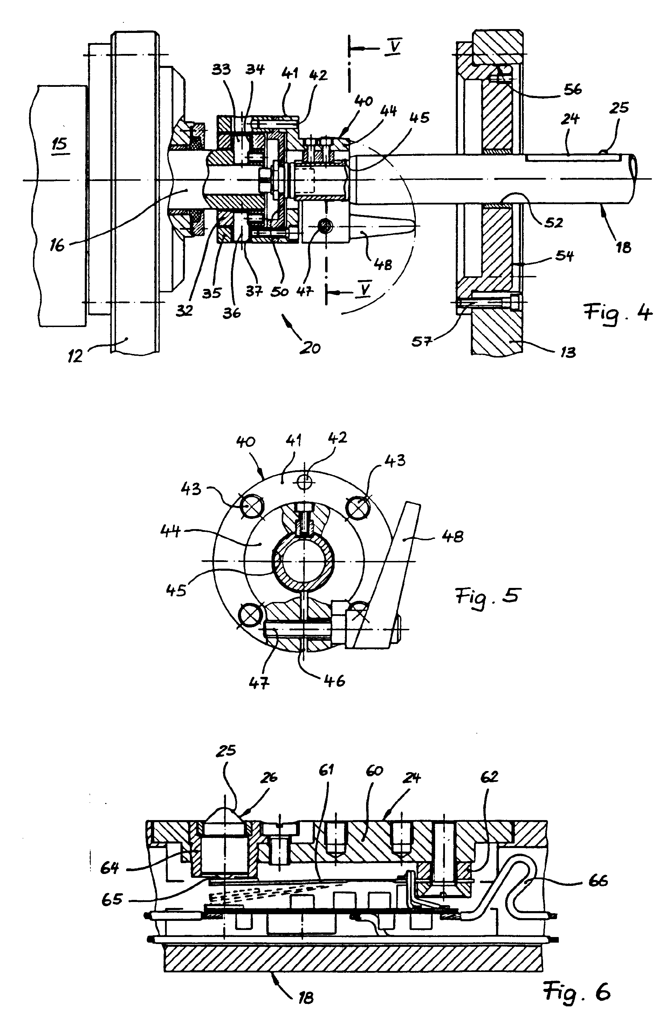

Fig. 4 im Ausschnitt gemäß IV aus Fig. 2 die dreh- und axialfeste Verbindung der Meßsonde mit der Antriebswelle der seinerseits fest an einem Ständer angeflanschten Antriebseinheit mittels eines in einer Schnittansicht veranschaulichten Kardangelenks,
Fig. 5 einen Querschnitt gemäß der Schnittlinie V-V in Fig. 4 durch die Meßsonde und den Bereich eines mittels einer Klemmschraube radial verspannbaren geschlitzten Klemmringes einer Kupplung zum festen, aber lösbaren Ankuppeln der Meßsonde an die Antriebswelle der Antriebseinheit und
Fig. 6 in einem vergrößerten Längsschnitt durch einen Teil der Meßsonde die Ausbildung eines Meßfühlers mit radial bewegbarem Taststift.

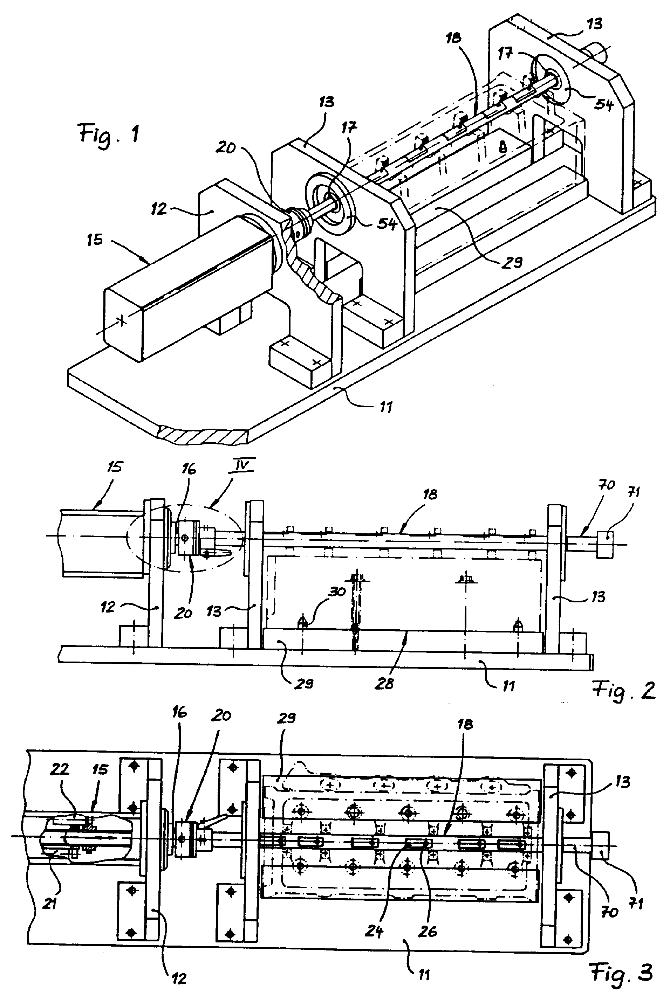

Die in den Fig. 1 bis 3 in ihrer Gesamtheit veranschaulichte Vorrichtung 10 umfaßt ein aus einer Grundplatte 11 und drei darauf aufgenommenen Ständern 12, 13 bestehendes Gestell. An den Außenständer 12 ist eine Antriebseinheit 15 mit einer sich durch den Ständer hindurcherstreckenden Antriebswelle 16 fest angeflanscht. In Lagern 17 der beiden anderen Ständer 13 ist fluchtend mit der Antriebswelle 16 der Antriebseinheit eine Meßsonde 18 axialbeweglich und drehbar gelagert, die über ein Kardangelenk 20 dreh- und axialfest, aber lösbar, mit der Antriebswelle der Antriebseinheit gekuppelt ist.

Die Antriebswelle 16 der Antriebseinheit 15 ist drehbar und axialbeweglich gelagert und steht mit je einem Antriebsmotor 21, 22 zum Erzeugen einer rotatorischen und translatorischen Bewegung in Wirkverbindung. Die fest, aber lösbar, an die Antriebswelle angekuppelte Meßsonde 18 ist mit nach Anzahl und axialem Abstand voneinander entsprechend den zu vermessenden Lagerbohrungen des Werkstücks angeordneten Meßfühlern 24 mit je einem mit seiner Spitze 25 radial über den Sondenmantel vorstehenden Taststift 26 ausgerüstet.

Bei bestimmungsgemäßer Verwendung der Vorrichtung wird zwischen den Ständern 13 mit den die Meßsonde 18 aufnehmenden Lagern 17 das Werkstück 28 positionsgenau aufgenommen, indem in an sich bekannter Weise auf Positionierböcken 29 angeordnete Indexstifte 30 in Indexbohrungen des Werkstücks eingreifen, die in letzteres von einer Auflagerseite aus eingebracht sind. Bei diesem Werkstück handelt es sich um einen Zylinderkopf mit hintereinanderliegenden und jeweils im Abstand voneinander angeordneten Lagerbohrungen, durch die sich die mit nach Anzahl und Lage entsprechend den Lagerbohrungen angeordneten Meßfühlern 24 ausgerüstete Meßsonde hindurcherstreckt.

Das die querkraftfreie Übertragung der Antriebsbewegung von der Antriebswelle 16 der Antriebseinheit 15 auf die Meßsonde 18 vermittelnde Kardangelenk 20 ist auf dem abtriebsseitigen Stumpf der Antriebswelle angeordnet, die sich durch den Ständer 12 des Gestells hindurcherstreckt, an dem die Antriebseinheit fest angeflanscht ist. Das Kardangelenk 20 umfaßt einen mit radialem Spiel auf dem abtriebsseitigen Stumpf der Antriebswelle aufgenommenen Innenring 32, der mittels radial gerichteter Mitnehmerzapfen 33 drehfest mit der Antriebswelle verbunden ist. Diese Mitnehmerzapfen sind in Radialbohrungen der Antriebswelle aufgenommen und durch vom stirnseitigen Ende aus in Gewindebohrungen eingeschraubte Madenschrauben gesichert.

Die über die Antriebswelle vorstehenden Abschnitte der genannten Mitnehmerzapfen 33 greifen in mit Lagerbuchsen 34 ausgerüstete Radialbohrungen des Innenrings 32 ein. Demgemäß kann der Innenring des Kardangelenks im Rahmen seines Radialspiels gegenüber der Abtriebswelle begrenzte Radialbewegungen ausführen. Der Innenring 32 des Kardangelenks 20 ist ebenfalls mit radialem Spiel von einem Außenring 35 umschlossen und der Innen- und Außenring sind gleichfalls mittels um 90° zu den erstgenannten Mitnehmerzapfen 33 versetzt angeordneter Mitnehmerzapfen 36 dreh- und axialfest miteinander verbunden. Diese Mitnehmerzapfen sind fest in Radialbohrungen des Innenrings 32 aufgenommen und ebenfalls durch in stirnseitige Gewindebohrungen eingeschraubte Madenschrauben gesichert. Die Radialbohrungen im Außenring 35 sind wiederum mit Lagerbuchsen 37 ausgerüstet. Die Mitnehmerzapfen und die mit Lagerbuchsen bestückten Lagerbohrungen im Innen- und Außenring bilden somit Gleitlager, die innerhalb des jeweiligen Spiels zwischen der Antriebswelle 16 und dem Innenring 32 einerseits und zwischen letzterem und dem Außenring 35 andererseits Radialbewegungen des Innen- und Außenrings sowie begrenzte Winkelbewegungen dieser Ringe gegeneinander zulassen. Das Kardangelenk gleicht somit nicht nur Winkelfehler aus, sondern nimmt auch radialen Achsversatz auf.

Zum wahlweisen Ankuppeln einer Meßsonde 18 an die Antriebswelle 16 der Antriebseinheit 15 dient eine Kupplung 40 mit einer Kupplungsmuffe 41, die abtriebsseitig mit dem Außenring 35 des Kardangelenks 20 mittels eines in axialen Ausnehmungen aufgenommenen Stiftes 42 und über den Umfang verteilt angeordneter Befestigungsschrauben 43 fest verbunden ist. Von dieser Kupplungsmuffe erstreckt sich auf der vom Kardangelenk 20 abgewandten Seite ein Klemmring 44 fort, der eine zylindrische Aufnahme 45 für einen Kupplungszapfen der jeweils angekuppelten Meßsonde 18 besitzt und über einen Umfangsbereich von etwa 180° von der Kupplungsmuffe getrennt sowie in diesem Bereich mit einem Radialschlitz 46 versehen und mittels einer sich quer zu letzterem erstreckenden Spannschraube 47 mit einem Spannhebel 48 radial verspannbar ist. Zwischen der Kupplungsmuffe 41 und dem Außenring 35 des Kardangelenks 20 ist eine Mitnehmerscheibe 50 aufgenommen, die mit einem in eine stirnseitige Ausnehmung des Zapfens der jeweiligen Meßsonde formschlüssig eingreifenden Mitnehmer ausgerüstet ist.

Die beidendigen Lager 17 der Meßsonde 18 sind als Gleitlager ausgebildet und bestehen jeweils aus einer Lagerschale 52 mit sich zu den beiden stirnseitigen Enden hin erweiternder Lagerbohrung und einer Trägerscheibe 54, in der die jeweils zugeordnete Lagerschale fest aufgenommen ist. Die Trägerscheiben 54 ihrerseits sind in mit der Achse der Antriebswelle 16 der Antriebseinheit 15 fluchtenden Präzisionsausnehmungen 56 in den die Werkstückaufnahme beidseitig begrenzenden Ständern 13 des Gestells austauschbar aufgenommen und mittels Verschraubungen 57 am jeweiligen Ständer befestigt. Wenn die Meßvorrichtung umgerüstet werden soll, gelingt dies in einfacher Weise, indem die Meßsonde und deren beidendige Lager mit den diese aufnehmenden Trägerscheiben ausgetauscht werden.

Wie bereits oben ausgeführt, ist die Meßsonde 18 mit nach Anzahl und axialem Abstand voneinander entsprechend den zu vermessenden Zylinderbohrungen angeordneten Meßfühlern 24 ausgerüstet, die vollständig in die Meßsonde integriert sind und von denen lediglich die Spitzen 25 der radialbewegbar geführten Taststifte 26 über den Sondenmantel vorstehen. Fig. 6 veranschaulicht einen der Meßfühler, die untereinander gleich ausgebildet sind. Der Meßfühler ist als in einer Querausnehmung der Meßsonde 18 eingefügter und außenseitig der Sonde angepaßter Einsatz 60 ausgebildet. Eine mit Dehnmeßstreifen bestückte Blattfeder 61 ist in einem verschraubten inneren Halteblock 62 des Einsatzes 60 einseitig eingespannt und auf das freie Ende dieser Blattfeder wirkt der Taststift 26, dessen Spitze 25 radial über den Sondenmantel vorsteht und der radial bewegbar in einer mit dem Einsatz verschraubten Führungsbuchse 64 aufgenommen ist. Der am freien Ende der Blattfeder angreifende Abschnitt 65 des Taststiftes ist ballig ausgebildet. Die in Fig. 6 veranschaulichten Leitungen 66 erstrecken sich durch die rohrförmige Meßsonde 18 hindurch und dienen in bekannter Weise zur Signalübermittlung in Abhängigkeit von den jeweiligen Auslenkungen der Blattfedern 61 der einzelnen Meßfühler, was hier indessen keiner weiteren Erörterung bedarf.

In den Fig. 2 und 3 ist die Anbringung eines Adapters 70 mit einem Gegengewicht 71 an dem von der Antriebseinheit 15 entfernten Ende der Meßsonde 18 veranschaulicht. Dieses Gegengewicht dient dazu, unter Eigengewicht der Meßsonde auftretende Sondendurchbiegungen zwischen den beidendigen Lagern 17 zumindest teilweise zu kompensieren, indem durch das Gegengewicht ein definiertes Biegemoment auf die Meßsonde aufgebracht wird, das der Durchbiegung infolge Eigengewicht entgegenwirkt.

Die als Ausführungsbeispiel veranschaulichte Meßvorrichtung dient zum Vermessen der Lagerbohrungen für die Nockenwellenlager in Zylinderköpfen von Brennkraftmaschinen. Bei bestimmungsgemäßer Verwendung ist das Werkstück zwischen den die beidendigen Lager 17 der Meßsonde aufnehmenden Ständern 13 auf Positionierböcken 29 aufgenommen und durch in Indexbohrungen des Werkstücks eingreifende Indexstifte 30 lagerichtig gesichert. Die Meßsonde 18 erstreckt sich dann durch die jeweils in axialem Abstand voneinander angeordneten Lagerbohrungen des Werkstücks hindurch. Dabei befinden sich die Taststifte 26 der Meßfühler 24 im Bereich der zu vermessenden Lagerbohrungen. Vermessen werden die Lagerbohrungen, indem deren Innenkonturen aufeinanderfolgend auf mehreren benachbarten Kreislinien abgetastet werden. Zu diesem Zwecke wird die Meßsonde mittels des Motors 21 der Antriebseinheit 15 in Drehung versetzt und jeweils nach dem Ausmessen einer Kreislinie findet eine Axialverstellung der Meßsonde mittels des als Schrittmotor ausgebildeten Antriebsmotors 22 der Antriebseinheit statt.

## Patentansprüche

1. Vorrichtung zum gleichzeitigen Vermessen hintereinanderliegender Zylinderbohrungen, insbesondere der Lagerbohrungen von Lagergassen bei Motorblöcken, Zylinderköpfen oder dergleichen, auf Form und Fluchtung, mit einer als langgestrecktes Rohr ausgebildeten Meßsonde (18), die mit nach Anzahl und axialem Abstand voneinander entsprechend den zu vermessenden Zylinderbohrungen angeordneten, radial vorstehende Taststifte (25, 26) aufweisenden Meßfühlern (24) ausgerüstet ist, und mit einer Antriebseinheit (15), die eine mit der Meßsonde (18) fluchtende Antriebswelle (16) und je einen mit der Antriebswelle wirkverbundenen Antriebsmotor (21, 22) zum Erzeugen einer translatorischen und einer rotatorischen Bewegung besitzt,
dadurch gekennzeichnet,
daß die Meßsonde (18) beidendig in festen Lagern (17), die ihrerseits in Ständern (13) eines Vorrichtungsgestells aufgenommen sind, drehbar und axialbeweglich gelagert ist und sich durch die Zylinderbohrungen des zwischen den Ständern (13) mit den Meßsonden-Lagern (17) positionsgenau aufgenommenen Werkstücks (28) hindurcherstreckt, daß die Antriebseinheit (15) unabhängig von den Meßsonden-Lagern (17) ebenfalls gestellfest angeordnet ist und daß ein Ende der Meßsonde (18) mittels eines in begrenztem Maße Winkelfehler und radialen Achsversatz ausgleichenden Kardangelenks (20) mit der Antriebswelle (16) dreh- und axialfest gekuppelt ist.

2. Meßvorrichtung nach Anspruch 1, dadurch gekennzeichnet, daß mit dem abtriebsseitigen Ende der Antriebswelle (16) der Antriebseinheit (15) das Kardangelenk (20) fest verbunden und an letzteres die Meßsonde (18) mittels einer Kupplung (40) axial- und drehfest, aber lösbar, angekuppelt ist.

3. Meßvorrichtung nach Anspruch 2, dadurch gekennzeichnet, daß es sich bei der Kupplung (40) um eine Klemmkupplung mit einem geschlitzten Klemmring (44) handelt, der eine zylindrische Aufnahme (45) für einen Steckzapfen der Meßsonde (18) besitzt und mittels einer Spannschraube (47, 48) radial verspannbar ist.

4. Meßvorrichtung nach einem der Ansprüche 1 bis 3, dadurch gekennzeichnet, daß mit dem von der Antriebseinheit (15) entfernten Ende der Meßsonde (18) ein sich von dieser forterstreckender Adapter (70) mit einem definierten und einstellbaren Gegengewicht (71) zum Aufbringen eines Durchbiegungen der Meßsonde infolge Eigengewicht ausgleichenden Biegemoments dreh- und axialfest verbindbar ist.

5. Meßvorrichtung nach einem der Ansprüche 1 bis 4, dadurch gekennzeichnet, daß die beidendigen Lager (17) der Meßsonde (18) dem jeweiligen Ständer (13) des Gestells austauschbar zugeordnet sind.

6. Meßvorrichtung nach Anspruch 5, dadurch gekennzeichnet, daß die Lager (17) der Meßsonde (18) jeweils einer ihrerseits in einer Präzisions-Durchgangsbohrung (56) in dem jeweiligen Ständer (13) des Gestells austauschbar aufgenommenen Trägerscheibe (54) zugeordnet sind.

7. Meßvorrichtung nach Anspruch 5 oder 6, dadurch gekennzeichnet, daß die beidendigen Lager (17) der Meßsonde (18) als Gleitlager mit im Verhältnis zum Durchmesser kleiner Breite und sich jeweils zu den Lagerstirnseiten hin erweiternden Lagerbohrungen ausgebildet sind.

8. Meßvorrichtung nach Anspruch 5 oder 6, dadurch gekennzeichnet, daß die beidendigen Lager (17) der Meßsonde (18) als Pendellager ausgebildet sind.

9. Meßvorrichtung nach einem der Ansprüche 1 bis 8, dadurch gekennzeichnet, daß die Meßfühler (24) in die Meßsonde (18) integriert sind und lediglich die Spitzen (25) der Taststifte (26) radial über den Mantel der Meßsonde vorstehen.

## Claims

1. Device for the simultaneous measuring of cylinder bores disposed one behind the other, especially the bearing bores of bearing tunnels in engine blocks, cylinder heads or the like, with respect to shape and alignment, comprising a measuring probe (18), which is constructed as a longitudinally extending tube and is equipped with measuring sensors (24) having radially projecting feeler heads (25, 26) arranged according to the number and corresponding to the mutual axial spacing of the cylinder bores to be measured, and a drive unit (15), which possesses a drive shaft (16) aligned with the measuring probe (18) and a respective drive motor (21, 22) operatively connected with the drive shaft for the generation of a translational movement and of a rotational movement, characterised thereby that the measuring probe (18) is rotatably and axially movably mounted at both ends in fixed bearings (17), which in turn are accommodated in pedestals (13) of a device support and extend through the cylinder bores of the workpiece (28) received in exact position between the pedestals (13) with the measuring probe bearings (17), that the drive unit (15) is likewise arranged fixed to the support independently of the measuring probe bearings (17), and that one end of the measuring probe (18) is coupled, to be rotationally and axially fast, with the drive shaft (16) by means of a cardan joint (20) compensating for angular error and radial offset to a limited extent.

2. Measuring device according to claim 1, characterised thereby that the cardan joint (20) is fixedly connected with the drive output end of the drive shaft (16) of the drive unit (15) and the measuring probe (18) is coupled, axially and rotationally fast but detachably, with the cardan joint by means of a coupling (40).

3. Measuring device according to claim 2, characterised thereby that in the case of the coupling (40) there is concerned a clamp coupling with a slotted clamp ring (44), which possess a cylindrical receptacle (45) for a plug spigot of the measuring probe (18) and is radially tightenable by means of a tightening screw (47, 48).

4. Measuring device according to one of claims 1 to 3, characterised thereby that connectible rotationally and axially fast with that end of the measuring probe (18) which is remote from the drive unit (15) is an adaptor (70), which extends away therefrom and has a defined and adjustable counterweight (71) for the procuring of a bowing of the measuring probe due to a bending moment compensating for own weight.

5. Measuring probe according to one of claims 1 to 4, characterised thereby that the bearings (17), at both ends, of the measuring probe (18) are exchangeably associated with the respective pedestals (13) of the support.

6. Measuring probe according to claim 5, characterised thereby that the bearings (17) of the measuring probe (18) are respectively associated with a carrier disc (54) in turn exchangeably accommodated in a precision passage bore (56) in the respective pedestal (13) of the support.

7. Measuring device according to claim 5 or 6, characterised thereby that the bearings (17), at both ends, of the measuring probe (18) are constructed as slide bearings with bearing bores of smaller width in relation to the diameter and enlarging each time towards the bearing end faces.

8. Measuring device according to claim 5 or 6, characterised thereby that the bearings (17), at both ends, of the measuring probe (18) are constructed as self-aligning bearings.

9. Measuring device according to one of claims 1 to 8, characterised thereby that the measuring sensors (24) are integrated in the measuring probe (18) and merely the tips (25) of the feeler heads (26) project radially beyond the envelope surface of the measuring probe.

## Revendications

1. Dispositif pour déterminer simultanément la forme et l'alignement d'alésages cylindriques successifs, en particulier des alésages de roulements des trains de paliers des blocs moteurs, des culasses ou analogues, à l'aide d'une sonde de mesure (18), constituée d'un tube allongé, et qui est équipée de capteurs de mesure (24), comportant des palpeurs radialement en saillie (25, 26), et disposés, pour ce qui est de leur nombre et de leur distance axiale réciproque, en fonction des alésages cylindriques à mesurer, et comportant aussi une unité d'entraînement (15), laquelle possède un arbre d'entraînement (16) en alignement avec la sonde de mesure (18) et deux moteurs d'entraînement (21, 22), en liaison opérative avec l'arbre d'entraînement, destinés l'un à produire un mouvement de translation, l'autre un mouvement de rotation, caractérisé en ce que la sonde de mesure (18) est, en ses deux extrémités, logée de façon à pouvoir tourner et subir un déplacement axial dans des paliers fixes (17), qui pour leur part sont logés dans les montants (13) d'un bâti, la sonde de mesure traversant les alésages cylindriques de la pièce en oeuvre (28), logée en une position précise entre les montants (13) à l'aide des paliers (17) de la sonde de mesure ; que l'unité d'entraînement (15) est elle aussi disposée, indépendamment des paliers (17) de la sonde de mesure, d'une manière fixe par rapport au bâti ; et qu'une extrémité de la sonde de mesure (18), à l'aide d'un cardan (20) qui,dans certaines limites, compense les écarts angulaires et les décalages axiaux radiaux, est accouplée à l'arbre d'entraînement (16) d'une manière solidaire en rotation et en déplacement axial.

2. Dispositif de mesure selon la revendication 1, caractérisé en ce que le cardan (20) est fixé à demeure à l'extrémité de sortie de l'arbre d'entraînement (16) de l'unité d'entraînement (15), la sonde de mesure (18) étant accouplée au cardan à l'aide d'un accouplement (40), d'une manière solidaire en rotation et en déplacement axial, mais amovible.

3. Dispositif de mesure selon la revendication 2, caractérisé en ce que, pour ce qui est de l'accouplement (40), il s'agit d'un accouplement à serrage comportant un anneau de serrage fendu (44), lequel possède un logement cylindrique (45) destiné à un pivot d'emboîtement de la sonde de mesure (18) et peut être serré radialement à l'aide d'une vis de serrage (47, 48).

4. Dispositif de mesure selon l'une des revendications 1 à 3, caractérisé en ce qu'à l'extrémité de la sonde de mesure (18) éloignée de l'unité d'entraînement (15) peut être assemblé, d'une manière solidaire en rotation et en déplacement axial, un adaptateur (70), qui prolonge cette dernière, et qui comporte un contrepoids (71), parfaitement défini et réglable, destiné à appliquer un moment de flexion qui, du fait du poids propre du contrepoids, compense les flexions de la sonde de mesure.

5. Dispositif de mesure selon l'une des revendications 1 à 4, caractérisé en ce que les paliers (17) de la sonde de mesure (18), qui se trouvent aux deux extrémités, sont chacun affectés, d'une manière interchangeable, au montant correspondant (13) du bâti.

6. Dispositif de mesure selon la revendication 5, caractérisé en ce que chacun des paliers (17) de la sonde de mesure (18) est affecté à un disque porteur (54), logé pour sa part d'une manière interchangeable dans un trou passant de précision (56) aménagé dans le montant correspondant (13) du bâti.

7. Dispositif de mesure selon la revendication 5 ou 6, caractérisé en ce que les paliers (17) de la sonde de mesure (18), disposés aux deux extrémités, sont conçus comme des paliers lisses, comportant une largeur plus petite que leur diamètre, ainsi que des alésages s'étendant jusqu'à chacune des faces frontales des paliers.

8. Dispositif de mesure selon la revendication 5 ou 6, caractérisé en ce que les paliers (17) situés aux deux extrémités de la sonde de mesure (18) sont conçus comme des roulements à rotule.

9. Dispositif de mesure selon l'une des revendications 1 à 8, caractérisé en ce que les capteurs (24) sont intégrés dans la sonde de mesure (18) et que seules les pointes (25) des palpeurs (26) dépassent radialement au-delà de la surface latérale de la sonde de mesure.
